# FASCICULE DE BREVET EUROPEEN

(11) **EP 1 283 181 B1**
(45) Date de publication et mention de la délivrance du brevet: **01.06.2005**
(21) Numéro de dépôt: 02447153.4
(22) Date de dépôt: 12.08.2002
(51) Int. Cl.: B65D 85/16, B65D 81/36, E04B 1/78

(54) **Emballage à double utilisation d'un produit d'isolation en laine minérale**
Verpackungsmaterial mit doppeltem Verwendungszweck für Isolationsmineralwolle
Double use packaging material for mineral wool insulation material

(30) Priorité: 10.08.2001 BE 200100539
(43) Date de publication de la demande: 12.02.2003
(73) Titulaire: Knauf Insulation SA, 1300 Wavre (BE)
(72) Inventeur: Briard, Vincent, 4600 Visé (BE); Jacob, Joel, 4880 Aubel (BE)
(74) Mandataire: Claeys, Pierre

(56) Documents cités:
- DE-U- 9 114 614
- US-A- 4 350 001
- US-A- 5 556 682

## Description

La présente invention est relative à un produit d'isolation en laine minérale. Ce produit est destiné notamment à l'isolation thermique et acoustique de bâtiments, par exemple de bâtiments commerciaux et de maisons individuelles.

Les matériaux d'isolation en laine minérale, et plus particulièrement en fibre de verre, sont bien connus dans l'art antérieur. Ces matériaux en fibre de verre contiennent un liant, souvent une résine phénolique, qui appliquée sur la fibre et polymérisée dans un four donne un matelas qui a des propriétés mécaniques telles qu'il récupère son épaisseur au moment de la mise en oeuvre, malgré la compression qu'il a subie dans l'emballage, pendant le transport et le stockage.

Ce type d'isolant se présente généralement sous forme de panneaux ou de rouleaux. Il peut être ou non revêtu d'un pare-vapeur, en fonction de l'application et des règles de construction en vigueur là où il est utilisé. Dans le cas où un pare-vapeur est prévu, celui-ci est rendu solidaire du matelas de fibres.

On connaît un produit d'isolation comprenant
- un matelas isolant de laine minérale, enroulé sur lui-même en rouleau, et
- un ruban de matière d'emballage présentant une largeur au moins égale à celle du matelas isolant (voir par exemple US-A-5.556.682).
Ce produit d'isolation ne comporte pas de pare-vapeur pour toiture et le ruban étanche utilisé sert uniquement à emballer le matelas isolant de laine minérale pour le protéger contre toute pénétration d'humidité dans la laine minérale pendant le stockage et le transport.

Dans le cas de rouleaux, l'épaisseur du matelas varie de 20 à 260 mm, de préférence de 120 à 240 mm. Sa longueur dépend de son épaisseur et du taux de compression que peut subir le matelas sans que ses qualités physiques ne soient détériorées. La largeur est comprise entre 350 et 2.400 mm, de préférence entre 600 et 1.200 mm. La masse volumique du produit, qui caractérise son pouvoir isolant, varie de 8,5 à 50 kg/m³, et de préférence de 10,5 à 25 kg/m³.

En général ces rouleaux, revêtus ou non d'un pare-vapeur, sont emballés dans un film en matière plastique de type polyéthylène ou polypropylène, collé et rétracté sur le pourtour, ou dans un papier kraft. La plupart du temps ces rouleaux individuels sont ensuite emballés ensemble sur des palettes, ce qui facilite la manutention et permet un stockage à l'extérieur.

Lorsqu'il s'agit d'une application à une isolation de toiture inclinée de bâtiment, et plus particulièrement de maisons individuelles, un des principes d'application consiste selon la technique actuelle à découper, dans la longueur du matelas déroulé, des morceaux ou coupons de laine de verre, de largeur équivalente à la distance entre les chevrons de la charpente du toit, augmentée de quelques millimètres (entre 2 et 30 mm, en particulier entre 5 et 15 mm). Ces coupons découpés sont ensuite placés par l'utilisateur entre les chevrons de la toiture.

Dans le cas où le matelas de laine minérale n'est pas revêtu d'un pare-vapeur, il est d'usage d'appliquer sur les chevrons (côté chaud), après la pose de l'isolant, un pare-vapeur. Ce pare-vapeur est généralement constitué d'un film continu, par exemple en matière plastique ou en aluminium, qui se présente sous forme de bobines. On doit se le procurer indépendamment du matériau d'isolation. Il est fixé sur les chevrons habituellement par un système d'agrafage. Ensuite une bande adhésive placée sur les joints de film permet d'assurer une meilleure étanchéité à la vapeur d'eau.

Dans le cas où le matelas de laine minérale est déjà revêtu, dans le produit emballé, d'un pare-vapeur solidaire, l'application est terminée dès que la pose du matelas de laine minérale est effectuée. Toutefois, le produit demande préalablement à son emballage une procédure de solidarisation entre le matelas de fibre minérale et le pare-vapeur qui peut être complexe et grève son coût. En outre, le pare-vapeur ne recouvre que de manière discontinue la toiture et ne garantit donc pas une étanchéité totale.

L'intérêt d'utiliser un pare-vapeur est d'éviter que l'humidité dont est chargé l'air à l'intérieur du bâtiment isolé ne vienne condenser sur une surface froide, en l'occurrence le matériau isolant ou l'écran de sous-toiture. Cela peut provoquer de graves dégâts dans la toiture et/ou dégrader les propriétés d'isolation thermique de celle-ci.

La première application décrite ci-dessus a le grand intérêt d'utiliser un pare-vapeur continu sur toute la surface de la toiture et placé sous les chevrons. Ce principe garantit une grande étanchéité à la vapeur d'eau.

Toutefois, pour cette application, il est nécessaire de se procurer deux produits, emballés séparément, ce qui est une source évidente de pollution des chantiers.

La présente invention a pour but de proposer un produit d'isolation dont le matériau isolant emballé n'a pas été revêtu d'un pare-vapeur et qui permette simultanément les avantages de l'application d'un pare-vapeur continu sur toute la surface de la toiture. Ce produit doit aussi rencontrer les exigences actuelles en matière de pollution de l'environnement.

On a résolu ce problème, suivant l'invention, par un produit d'isolation en laine minérale, comprenant
- un matelas isolant de laine minérale, enroulé sur lui-même en rouleau, et
- un ruban de matière d'emballage présentant une largeur au moins égale à celle du matelas isolant,
ce produit étant caractérisé par le fait que le ruban de matière d'emballage présente une longueur au moins égale à celle du matelas isolant et des caractéristiques physiques appropriées pour une mise en oeuvre comme pare-vapeur pour toiture, et que ce ruban est enroulé autour du rouleau de matelas isolant déjà formé, de manière à former avec lui ledit produit d'isolation.

En se procurant ce produit, l'utilisateur acquiert ainsi simultanément un isolant en laine minérale non revêtu et un pare-vapeur non solidarisé à lui, ce qui permet de mettre en oeuvre l'isolation dans les conditions optimales d'un pare-vapeur continu sur toute la surface de la toiture. En outre, contrairement à ce qui se passe dans la pratique courante, ce produit permet de ne pas générer de déchets d'emballage, puisque la matière d'emballage est utilisée comme pare-vapeur.

Suivant une forme de réalisation de l'invention, le ruban de matière d'emballage a une longueur d'au moins 10 % supérieure à celle du matelas isolant, de préférence d'au moins 20 %. Avantageusement, la largeur du ruban de matière d'emballage sera supérieure à celle du matelas isolant. De cette manière la perte par les chutes de découpe peut être compensée, et on permet un recouvrement mutuel de rubans voisins du film d'emballage ce qui permet d'assurer une étanchéité correcte. Il est entendu que la largeur du ruban de matière d'emballage peut aussi être égale à celle du matelas isolant.

Le matériau d'emballage peut être une matière plastique, du papier, une feuille métallisée, etc. Il peut par exemple être à base d'homopolymères ou de copolymères de polyéthylène ou de polypropylène, de polyesters, de polyamides, etc. Du papier aluminium peut aussi convenir. Une combinaison de ces matières peut aussi être envisagée, ainsi qu'avec des adjuvants courants dans cette technique.

Les caractéristiques physiques de la matière d'emballage doivent être celles requises à la fois comme matériau d'emballage et comme pare-vapeur. Les propriétés principales sont donc une bonne tenue mécanique, une résistance au feu appropriée et une perméabilité à la vapeur d'eau limitée de manière contrôlée.

Comme propriétés physiques préférentielles, on peut citer les suivantes :
- Grammage selon la norme DIN 53352 : 25 à 300 g/m², de préférence 50 à 150 g/m².
- Epaisseur selon la norme DIN 53370 : 0,025 à 0,5 mm, de préférence 0,050 à 0,25 mm.
- Indice Sd (perméabilité à la vapeur d'eau) selon la norme DIN 52615 : 0,15 à 1000, de préférence 0,2 à 100.
- Classement au feu selon la norme DIN 4102 : B2, de préférence B1.
- Résistance à la déchirure sous l'action d'une pointe, selon la norme DIN 54301 : 30 à 500 N.
- Résistance à la perforation selon la norme DIN 53142 : 3 à 30 Nm, de préférence 5 à 20 Nm.
- Tension maximale selon la norme DIN 53354 : 100 à 750 N/5 cm, de préférence 200 à 500 N/5 cm.

Le matelas isolant de laine minérale peut avoir la forme d'un ruban courant, qui est par exemple à base de laine de verre ou de laine de roche.

D'autres indications relatives au produit d'isolation suivant l'invention et à son utilisation sont indiquées dans les revendications annexées.

Pour la réalisation du produit d'isolation suivant l'invention, on enroule tout d'abord le matelas isolant de laine minérale sur lui-même de manière à former un rouleau. D'une manière avantageuse, le ruban de matière d'emballage est ensuite enroulé autour du rouleau déjà formé, de préférence de la même manière et dans le même sens que le matelas isolant a été enroulé sur lui-même. On obtient ainsi des rouleaux qui peuvent atteindre une circonférence de 750 à 2000 mm, de préférence de 1000 à 1600 mm, et une hauteur de 600 à 2400 mm, de préférence de 1000 à 1500 mm en particulier d'environ 1200 mm.

Ces rouleaux sont alors stockés de manière courante, c'est-à-dire qu'ils sont assemblés, par unité de 3 à 4 rouleaux, dans un manchon de matière plastique ou par un système de cerclage. Puis ces unités sont assemblées et maintenues solidaires sur une palette en bois de manière à former un ensemble de dimensions compatibles avec par exemple celles des camions (environ 1200 x 1200 x 2550 mm). L'ensemble est enfin protégé des intempéries par une housse en matière plastique rétractable ou par un film étirable, qui recouvre entièrement les rouleaux et la palette en bois.

Il doit être entendu que la présente invention n'est en aucune façon limitée aux formes de réalisation décrites ci-dessus et que bien des modifications peuvent y être apportées sans sortir du cadre des revendications annexées.

## Revendications

1. Produit d'isolation en laine minérale, comprenant
- un matelas isolant de laine minérale, enroulé sur lui-même en rouleau, et
- un ruban de matière d'emballage présentant une largeur au moins égale à celle du matelas isolant,
**caractérisé**
**en ce que** le ruban de matière d'emballage présente une longueur au moins égale à celle du matelas isolant et des caractéristiques physiques appropriées pour une mise en oeuvre comme pare-vapeur pour toiture, et
**en ce que** ce ruban est enroulé autour du rouleau de matelas isolant déjà formé, de manière à former avec lui ledit produit d'isolation.

2. Produit d'isolation suivant la revendication 1, **caractérisé en ce que** le ruban de matière d'emballage a une longueur d'au moins 10 % supérieure à celle du matelas isolant.

3. Produit d'isolation suivant l'une quelconque des revendications 1 à 3, **caractérisé en ce que** la matière d'emballage présente des propriétés de tenue mécanique et de résistance au feu et est sensiblement imperméable à la vapeur d'eau.

4. Produit d'isolation suivant la revendication 3, **caractérisé en ce que** la matière d'emballage est à base d'une matière plastique, de papier, de matière métallique et/ou d'une combinaison de celles-ci.

5. Produit d'isolation suivant la revendication 4, **caractérisé en ce que** la matière d'emballage est en une matière plastique choisie parmi le groupe constitué des polyéthylènes, des polypropylènes, des polyesters et des polyamides.

6. Produit d'isolation suivant l'une quelconque des revendications 1 à 5, **caractérisé en ce que** le matelas isolant est à base de laine de verre ou de laine de roche.

7. Utilisation du produit d'isolation suivant l'une quelconque des revendications 1 à 6, pour une isolation de toiture, par application sur celle-ci dudit matelas isolant de laine minérale et d'un pare-vapeur continu sur toute la surface de la toiture, qui est formé dudit ruban de matière d'emballage.

## Patentansprüche

1. Isolationsprodukt aus Mineralwolle, umfassend
- eine isolierende Matte aus Mineralwolle, die um sich selbst als Rolle aufgewickelt ist, und
- ein Band aus Verpackungsmaterial, das eine Breite mindestens gleich derjenigen der isolierenden Matte aufweist,
**dadurch gekennzeichnet,**
**daß** das Band aus Verpackungsmaterial eine Länge mindestens gleich derjenigen der isolierenden Matte und physikalische Eigenschaften aufweist, die geeignet sind für einen Einsatz als Dampfsperre für ein Dach, und
**daß** dieses Band um die bereits gebildete Rolle aus der isolierenden Matte so aufgewickelt ist, daß es mit ihr das Isolationsprodukt bildet.

2. Isolationsprodukt nach Anspruch 1, **dadurch gekennzeichnet, daß** das Band aus Verpackungsmaterial eine Länge von mindestens 10 % über derjenigen der isolierenden Matte aufweist.

3. Isolationsprodukt nach einem der Ansprüche 1 bis 3, **dadurch gekennzeichnet, daß** das Verpackungsmaterial Eigenschaften der mechanischen Beständigkeit und der Feuerfestigkeit aufweist und im wesentlichen undurchlässig für Wasserdampf ist.

4. Isolationsprodukt nach Anspruch 3, **dadurch gekennzeichnet, daß** das Verpackungsmaterial auf einem Kunststoff, auf Papier, auf metallischem Material und/oder auf einer Kombination von diesen basiert.

5. Isolationsprodukt nach Anspruch 4, **dadurch gekennzeichnet, daß** das Verpackungsmaterial aus einem Kunststoff ist, der ausgewählt ist aus der Gruppe bestehend aus Polyethylenen, Polypropylenen, Polyestern und Polyamiden.

6. Isolationsprodukt nach einem der Ansprüche 1 bis 5, **dadurch gekennzeichnet, daß** die isolierende Matte auf Glaswolle oder Steinwolle basiert.

7. Verwendung des Isolationsprodukts nach einem der Ansprüche 1 bis 6 für eine Isolation eines Daches durch Aufbringen der isolierenden Matte aus Mineralwolle auf dieses und einer kontinuierlichen Dampfsperre, die aus dem Band aus Verpackungsmaterial gebildet ist, auf die ganze Oberfläche des Daches.

## Claims

1. Mineral wall insulation product, comprising
- an insulating mineral wool mat, wound on itself in a roll, and
- a strip of packaging material having a width at least equal to that of the insulating mat,
**characterised**
**in that** the strip of packaging material has a width at least equal to that of the insulating mat and physical characteristics appropriate for use as a vapour barrier for a roof, and
**in that** this strip is wound around the roll of insulating mat already formed, so as to form the said insulation product with it.

2. Insulation product according to Claim 1, **characterised in that** the strip of packaging material has a length at least 10% greater than that of the insulating mat.

3. Insulation product according to any one of Claims 1 to 3, **characterised in that** the packaging material has properties of mechanical strength and fire resistance and is substantially impermeable to water vapour.

4. Insulation product according to Claim 3, **characterised in that** the packaging material is based on a plastics material, paper, metallic material and/or a combination of these.

5. Insulation product according to Claim 4, **characterised in that** the packaging material is made from a plastics material chosen from amongst the group consisting of polyethylenes, polypropylenes, polyesters and polyamides.

6. Insulation product according to any one of Claims 1 to 5, **characterised in that** the insulating mat is based on glass wool or rock wool.

7. Use of the insulation product according to any one of Claims 1 to 6, for a roof insulation, by application to this of the said insulating mat of mineral wool and a continuous vapour barrier over the entire surface of the roof, which is formed from the said strip of packaging material.
